# EUROPEAN PATENT SPECIFICATION

(11) **EP 0 863 197 B1**
(45) Date of publication and mention of the grant of the patent: **18.06.2003**
(21) Application number: 95936417.5
(22) Date of filing: 07.11.1995
(51) Int. Cl.: C10G 1/10, C10G 1/00

(54) **A PROCESS FOR PRODUCING GASOLINE, DIESEL FUEL AND CARBON BLACK FROM WASTE RUBBER AND/OR WASTE PLASTICS**
VERFAHREN ZUR HERSTELLUNG VON BENZIN, DIESELTREIBSTOFF UND RUSS AUS GUMMI- UND/ODER KUNSTSTOFFABFÄLLEN
PROCEDE RELATIF A LA FABRICATION D'ESSENCE, DE CARBURANT DIESEL ET DE NOIR DE CARBONE A PARTIR DE DECHETS DE CAOUTCHOUC ET/OU DE MATIERES PLASTIQUES

(30) Priority: 08.08.1995 CN 95107978
(43) Date of publication of application: 09.09.1998
(73) Proprietor: Xing, Li, Bejing, 102403 (CN)
(72) Inventor: Xing, Li, Bejing, 102403 (CN)
(74) Representative: Goddar, Heinz J., Dr.
(86) International application number: PCT/CN95/00088
(87) International publication number: WO 97/006224

(56) References cited:
- WO-A-95/06682
- CN-A- 1 075 328
- JP-A- 3 086 790
- JP-A- 5 345 894
- JP-A- 6 220 458
- JP-A- 6 228 568
- JP-A- 7 048 576
- JP-A- 7 166 171

## Description

### Field of the Invention

The present invention relates to a process for treating waste rubber and/or waste plastics, and more particularly to a process employing pyrolysis and catalytic cracking of waste rubber and/or waste plastics to produce gasoline, diesel and carbon black.

### Background of the Invention

Many methods for preparing gasoline and diesel with waste rubber and waste plastics including those disclosed in US5,414,169, US4,851,601 and EP-A-0607862 and the like have been reported. US5,414,169 teaches a method in which pyrolysis reaction of waste rubber or waste plastics is first carried out, then resultant product is fluidified, and finally catalytic cracking is practiced with a catalyst in a liquid phase. US4,851,601 discloses a process in which catalytic cracking of product from pyrolysis of waste plastics is carried out in gaseous phase with a catalyst ZSM-5. The process cannot be used to treat a polyolefine containing halogen which makes the catalyst inactive. EP-A-0607862 discloses a method, in which materials from pyrolysis undergo the reaction of catalytic cracking with a acidic solid catalyst to produce a primary product from catalytic pyrolysis which is separated by cooling, then the resultant components in gaseous phase are subjected to a catalyst such as H₃PO₄ to give a secondary hydrocarbon oil.

### Summary of the Invention

The invention provides a method for producing gasoline, diesel and carbon black by using waste plastics and/or waste rubber. According to the invention, waste plastics and/or waste rubber materials being properly pretreated are charged into a pyrolysis reactor with a screw feeder or a reciprocating feeder. A spiral stirrer in the pyrolysis reactor is operated to stirred the contents when the reactant are charged. After the pyrolysis reaction is completed, resulting carbon black is drained away with the spiral stirrer from the pyrolysis reactor vessel. Other resulting substances of gaseous phase having lower molecular weight are subjected to a tank of desulfurating and/or denitrinating and/or dechlorinating to desulfurate and/or denitrinate and/or dechlorinate. Residual sulfur, nitrogen and chlorine are removed through a fixed bed, while primary catalytic pyrolysis is simultaneously conducted. Materials in gaseous phase enter the device for catalytic cracking to undergo the reaction of catalytic cracking therein. The substances produced by the catalytic cracking are separated to give the desired products. The spiral stirrer arranged in the pyrolysis reactor according to the invention decreases coking of the reacting substances, and enhances the efficiency of conduction of heat. In addition, the stirrer is rotated clockwise during the pyrolysis reaction, but drains the carbon black away when rotated counterclockwise. A special catalyst is employed in the invention, and the device for desulfurating and/or denitrinating and/or dechlorinating makes the life of the catalyst longer, and the range of materials treated wider. It solves problems known in the art.

### Brief Description of the Drawings

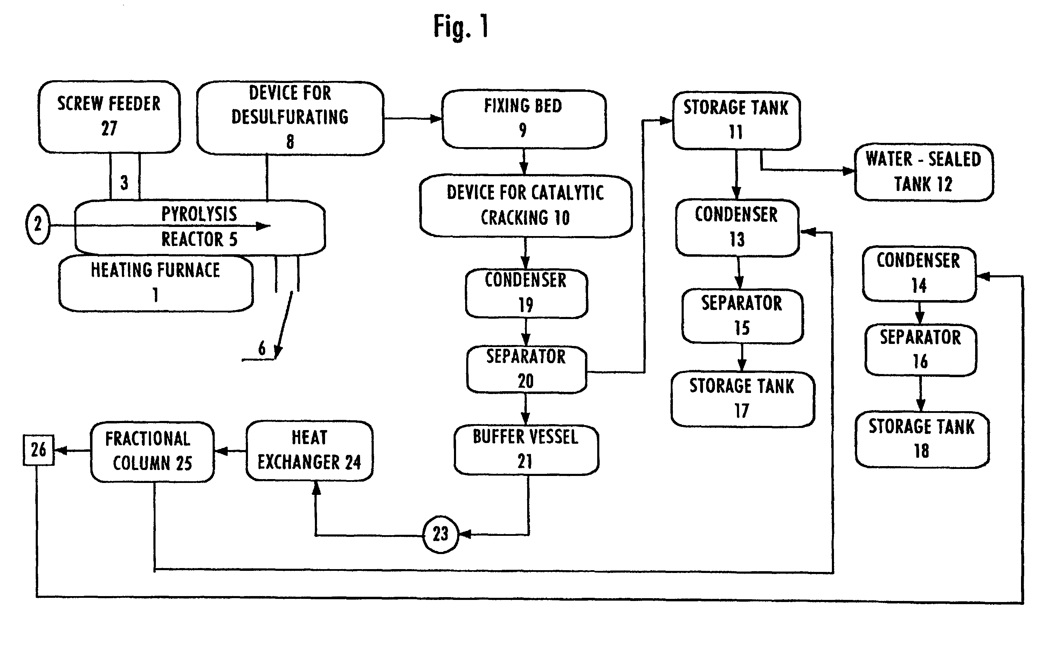

Figure 1 is a schematic view of the reaction apparatus according to the invention, wherein the elements are:
- 27: screw feeder or reciprocating feeder
- 1: heating furnace
- 5: pyrolysis reactor
- 2: spiral stirrer
- 8: a first device, for desulfurating and/or denitrinating and/or dechlorinating
- 9: a second device, for desulfurating and/or denitrinating and/or dechlorinating, and for simultaneously carrying out the primary recation of catalytic cracking
- 10: a device for catalytic cracking, and
- 25: a fractional column

### Detailed Description of the Invention

According to preferred embodiments of the invention, waste rubber materials (NR, SR, SBR, BR, IR, CR, NBR, EPR, EPM and IIR ) and/or waste plastics ( PE, PP, PS, PVC, ABC, etc. ) are pretreated in known manner to remove impurities. A heating furnace 1 provides heat to a pyrolysis reactor 5 to control the temperature therein in the range of 350-500°C. The waste rubber and/or waste plastics treated are charged into the reactor 5 through a feeding inlet 3. A spiral stirrer 2 in the reactor is operated to stir when the reactive materials enter. The waste rubber and/or waste plastics undergo a reaction of pyrolysis in the range of the temperature. In the reactor 5 they are decomposed to generate hydrocarbons in gaseous substances having lower molecular weight. If the materials are waste rubber , they are entirely decomposed and carbon black residue is discharged out of the reactor through a valve 6 under the action of the spiral stirrer 2 and can be used for preparation of tires. Through the top of pyrolysis reactor 5, substances of gaseous phase having lower molecular weight are directed to device 8 for desulfurating and/or denitrinating and/or dechlorinating, in which base materials such as granular NaOH or KOH or fused forms thereof are provided. Most of the acidic gases such as HCl, SO₂, SO₃, H₂S,etc. resulting from pyrolysis are absorbed in the device 8. The gaseous substances from device 8 enter a fixed bed 9, in which unabsorbed acidic gases and other odoriferous gases are removed while the primary reaction of catalytic cracking proceeds simultaneously. A particular catalyst DL, prepared by the inventor, is used in the fixed bed 9. The gaseous substances from the fixed bed 9 are charged into a device 10 which, arranged as a fixed bed, is then used for catalytic cracking. A catalyst XL used in the device 10 is also prepared by the inventor. The complete reaction of catalytic cracking of gaseous substances from the device 9 is thus carried out, along with a series of other reactions such as folding reaction, reaction of hydrogen transfer and reaction of aromatization. Gasoline, diesel and other mixed components of combustible gases are obtained from these reactions. The reactions in the fixed beds 9 and 10 are carried out at a temperature of 200-400°C, under a pressure of 0.02-0.08 MPa, and at an air speed 1-2000 m/h.

The products of catalytic cracking from the device 10 are introduced into a condenser 19, in which they are cooled down to room temperature. The resulting liquid is a mixture of gasoline and diesel. The materials from the devise 19 enter a buffer vessel 21 through a separator 20. The gases are charged into a storage tank 11 from the top of the separator 20 from which the combustible gas is introduced back into the heating furnace 1 to burn. Residue gas in the tank 11 is discharged into air to burn through a water-sealed tank 12. The liquid oil mix in the buffer vessel 21 is treated with inorganic acid such as sulfuric acid for removing impurities. The oil mix is pumped into a heat exchange 24 with a pump 23 to be heated to a temperature of 250-350C, then introduced into a fractional column 25, in which gaseous and diesel are separated in different distillation cuts. Gasoline is introduced into a condenser 14 from the top of column 25, and enters a gasoline storage tank 28 through a separation facility 16 for separating oil and water. Diesel enters a stripper 26 from the middle of the fractional column 25. Diesel is introduced into a condenser 13 after treatment by the overheated vapor, then enters a diesel storage tank 17 through a separation facility 15 for separating oil and water.

The catalyst DL in the fixed bed 9 is composed of a mixture of materials A and B, wherein the material A comprises 40-70% kaolin or activated clay, 10-30% aqueous solution of KOH or NaOH ( 10-20% of solid content ), 10-15% ZnO or soluble zinc salt, 3-5% CuO or soluble copper salt, and a suitable amount of a binder of silicon or aluminum such as conventional binders used in the art, for example, sodium silicate. The materials are mixed, washed, dried and calcined at a temperature of 500-700 C, and material A is thus obtained. Material B comprises 40-80% kaolin or activated clay, 10-30% aqueous solution of NaOH or KOH ( 10-20% of solid content ), 10-20% CaO or CaCO_{3,} and a suitable amount of a binder of silicon or aluminum such as conventional binders used in the art, for example, sodium silicate. The materials are mixed, shaped, washed, dried and not calcined or calcined at a temperature of 500-700°C, and material B is thus obtained.

The ratio of the mixture of materials A and B may be varied by persons skilled in the art if desired. Preferably, it is prepared as a particulate.

The catalyst XL in the device 10 for catalytic cracking comprises 10-70% synthetic carrier or semi-synthetic carrier, 10-50% HZSM-5 zeolite, 10-20% aqueous solution of NaOH or KOH ( 10-20% of solid content), 3-5% ZnO or a compound selected from the group consisting of Zn, Pt, Fe, Cu and Ni, and a suitable amount of a binder of silicon or aluminum such as conventional binders used in the art, preferably, sodium silicate. The materials are mixed, shaped, washed, dried and calcined at a temperature of 500-700°C, and catalyst XL is thus obtained. Said synthetic carrier is prepared by the method of co-gelatination or precipitate, which contains 20-80% SiO₂ as amorphous Si-Al, and Si-Mg and the like. A suitable amount of clay can be added to the synthetic carrier to adjust the bulk of the catalyst. Said semi-synthetic carrier comprises kaolin, polyhydrate kaolin or activated clay, which are used as carriers of the cracking catalyst in the art, and a binder selected from the group consisting of Al₂O₃, Na₂SiO₃, and SiO₂•Al₂O₃. Preferably, the catalyst is prepared as a particulate.

### Example 1

1000 kg plastics waste was ground after removal of impurities. The materials were then charged into the reactor 5 for pyrolysis via the feeder inlet 3. The pyrolysis device 5 was heated with the heating furnace 1 to keep the temperature of materials in the device at 350-500°C while the pyrolysis reaction was carried out and the materials were decomposed into gaseous hydrocarbons of small molecular weight. Gas from the device 5 was charged into the device 8 to remove acidic gases. Gaseous substances from the device 8 were further treated to remove the residual sulfur, chlorine and nitrogen by the catalyst DL in the fixed bed in the device 9, where the primary reaction of the catalytic cracking proceeded. The substances from the device 9 entered the device 10 to perform the reaction of catalytic cracking. The temperature in the devices 9 and 10 was 200-400°C, and the pressure was in the range of 0.02-0.08 MPa. The materials from the device 10 were separated and fractionated to give gasoline 370 kg and diesel 370 kg. The RON of gasoline of the product was 90-93, dried point ≤ 205. The cetane ratio of diesel of the product was 45-60. The 95% distillation range of diesel in the product was less than 360°C ( freezing point ≤ -20°C).

### Example 2

In the same manner as in Example 1, 1000 kg waste rubber was used to give gasoline 320 kg, diesel 309 kg and carbon black 280 kg. The BP absorption value of carbon black was 47±7 cm²/100g, the ash content ≤ 0.3%, and the heated reduction ≤ 1.0%.

### Industrial Applicability

According to the method of the invention, gasoline, diesel and carbon black can be produced with a higher yield by using materials of waste plastics and/or waste rubber. The method of the invention can be used to guarantee the consecutive production in the industry.

## Claims

1. A process for producing gasoline, diesel and carbon black from waste rubber and/or plastics materials, comprising: charging the waste material into a pyrolysis device through a feeder; discharging carbon black from the pyrolysis; charging the resulting materials in gaseous phase into a device for catalytic cracking; and fractionating the resulting products through a fractional column, wherein the reactive materials are stirred with a screw stirrer in the pyrolysis device, and enter a device for desulfurating and/or denitrinating and/or dechlorinating prior to entering the device for catalytic cracking; said device for desulfurating and/or denitrinating and/or dechlorinating comprises an absorption device with a base and an absorption device with a fixed bed; said catalyst used in the device for cata-1ytic cracking is prepared as follows: 10-70 % synthetic carrier or semi-synthetic carrier, 10-50 % HZSM-5 zeolite, 10-20 % aqueous solution of NaOH or KOH (10-20 % of solid content), 3-5 % ZnO or a compound selected form the group consisting of Zn, Pt, Fe, Cu and Ni, and a suitable amount of a binder of silicon or aluminium are mixed, shaped, dried and calcined or not calcined to give the desired catalyst; said catalyst used in the fixed bed is made from A and B, in which;
A is prepared by mixing 40-70 % kaolin or activated clay, 10-30 % aqueous solution, of NaOH or KOH (10-20 % of solid content), 10-15 % ZnO or a soluble zinc salt, and 3-5 % CuO or a soluble copper salt, with suitable amount of a binder of silicon or aluminium, washing, drying and calcining, and
B is prepared by mixing 40-70 % kaolin or activated clay, 10-30 % aqueous solution of NaOH or KOH (10-20 % of solid content), 10-20 % CaO or CaCO₃, with suitable amount of a binder of silicon or aluminium, shaping, drying and calcining.

2. The process according to claim 1, wherein said absorption device with a fixed bed is also a device for catalytic cracking.

3. The process according to claim 1, wherein the reaction temperature in the absorption device with a fixed bed or the device for catalytic cracking is in the range of 200-400C, and the pressure is in the range of 0.02-0.08 MPa.

4. The process according to claim 1, wherein said catalyst is prepared as a particulate.

## Patentansprüche

1. Verfahren zur Herstellung von Benzin, Diesel und Ruß aus Gummi- und/oder Kunststoffabfallmaterialien, welches umfaßt: Einbringen des Abfallmaterials in eine Pyrolyseeinheit durch eine Zuführeinrichtung; Abführen von Ruß aus der Pyrolyse; Einbringen der resultierenden Materialien in Gasphase in eine Einheit zum katalytischen Cracken; und Fraktionieren der resultierenden Produkte durch eine Fraktionierkolonne, wobei die reaktiven Materialien in der Pyrolyseeinheit mit einem Schraubenrührer gerührt werden und vor dem Eintritt in die Einheit zum katalytischen Cracken in eine Einheit zum Entschwefeln und/oder Entsticken und/oder Entchloren eintreten; wobei besagte Einheit zum Entschwefeln und/oder Entsticken und/oder Entchloren eine Absorptionseinheit mit einer Base und eine Absorptionseinheit mit einem Festbett umfaßt; wobei besagter Katalysator, der in der Einheit zum katalytischen Cracken verwendet wird, wie folgt hergestellt ist: 10 - 70 % synthetischer Trägerstoff oder halbsynthetischer Trägerstoff, 10 - 50 % HZSM-5-Zeolith, 10 - 20 % wäßrige Lösung von NaOH oder KOH (10 - 20 % Feststoffgehalt), 3 - 5 % ZnO oder einer Verbindung, die ausgewählt ist aus der Gruppe, bestehend aus Zn, Pt, Fe, Cu und Ni, und eine geeignete Menge eines Silicium- oder Aluminium-Bindemittels werden vermischt, ausgeformt, getrocknet und kalziniert oder nicht kalziniert, um den gewünschten Katalysator zu ergeben; wobei besagter Katalysator, der im Festbett verwendet wird, aus A und B hergestellt ist, wobei
A hergestellt ist durch Vermischen von 40 - 70 % Kaolin oder aktiviertem Ton, 10 - 30% wäßriger Lösung von NaOH oder KOH (10 - 20 % Feststoffgehalt), 10 - 15 % ZnO oder eines löslichen Zinksalzes und 3 - 5 % CuO oder eines löslichen Kupfersalzes mit einer geeigneten Menge eines Silicium- oder Aluminium-Bindemittels, Waschen, Trocknen und Kalzinieren und
B hergestellt ist durch Vermischen von 40 - 70 % Kaolin oder aktiviertem Ton, 10 - 30 % wäßriger Lösung von NaOH oder KOH (10 - 20 % Feststoffgehalt), 10 - 20 % CaO oder CaCO₃ mit einer geeigneten Menge eines Silicium- oder Aluminium-Bindemittels, Ausformen, Trocknen und Kalzinieren.

2. Verfahren nach Anspruch 1, **dadurch gekennzeichnet, daß** besagte Absorptionseinheit mit einem Festbett auch eine Einheit zum katalytischen Cracken ist.

3. Verfahren nach Anspruch 1, **dadurch gekennzeichnet, daß** die Reaktionstemperatur in der Absorptionseinheit mit einem Festbett oder der Einheit zum katalytischen Cracken im Bereich von 200 - 400°C liegt und der Druck im Bereich von 0,02 - 0,08 MPa liegt.

4. Verfahren nach Anspruch 1, **dadurch gekennzeichnet, daß** besagter Katalysator als ein teilchenförmiges Material hergestellt ist.

## Revendications

1. Procédé de production d'essence, de carburant diesel et de noir de carbone à partir de déchets de caoutchouc et/ou de matières plastiques, comprenant : le chargement du matériau de déchet dans un dispositif de pyrolyse par l'intermédiaire d'un dispositif d'alimentation, le déchargement du noir de carbone provenant de la pyrolyse, le chargement des matériaux résultants en une phase gazeuse dans un dispositif destiné à un craquage catalytique, et le fractionnement des produits résultants par l'intermédiaire d'une colonne de fractionnement, dans lequel les matériaux réactifs sont agités avec un agitateur à vis dans le dispositif de pyrolyse, et pénètrent dans un dispositif destiné à une désulfuration et/ou une dénitration et/ou une déchloration avant de pénétrer dans le dispositif destiné au craquage catalytique, ledit dispositif destiné à une désulfuration et/ou une dénitration et/ou une déchloration comprend un dispositif d'absorption comportant une base et un dispositif d'absorption comportant un lit fixe, ledit catalyseur utilisé dans le dispositif destiné au craquage catalytique est préparé comme suit : 10 à 70 % de support synthétique ou de support semi-synthétique, 10 à 50 % de zéolite HZSM-5, 10 à 20 % de solution aqueuse de NaOH ou KOH (10 à 20 % de teneur en solide), 3 à 5 % de ZnO ou d'un composé choisi parmi le groupe constitué de Zn, Pt, Fe, Cu et Ni, et une proportion appropriée d'un liant de silicium ou d'aluminium sont mélangés, façonnés, séchés et calcinés ou non calcinés pour donner le catalyseur souhaité, ledit catalyseur utilisé dans le lit fixe est fabriqué à partir de A et de B, dans lesquels : .
A est préparé par un mélange de 40 à 70 % de kaolin ou d'argile activée, de 10 à 30 % d'une solution aqueuse de NaOH ou KOH (10 à 20 % de teneur en solide), de 10 à 15 % de ZnO ou d'un sel de zinc soluble, et de 3 à 5 % de CuO ou d'un sel de cuivre soluble, avec une proportion appropriée d'un liant de silicium ou d'aluminium, par un lavage, un séchage et une calcination, et
B est préparé par un mélange de 40 à 70 % de kaolin ou d'argile activée, de 10 à 30 % de solution aqueuse de NaOH ou de KOH (10 à 20 % de teneur en solide), de 10 à 20 % de CaO ou de CaCO₃, avec une proportion appropriée d'un liant de silicium ou d'aluminium, par une mise en forme, un séchage et une calcination.

2. Procédé selon la revendication 1, dans lequel ledit dispositif d'absorption comportant un lit fixe est également un dispositif destiné au craquage catalytique.

3. Procédé selon la revendication 1, dans lequel la température de la réaction dans le dispositif d'absorption comportant un lit fixe ou dans le dispositif destiné au craquage catalytique se situe dans la plage de 200 à 400 °C, et la pression se situe dans la plage de 0,02 à 0,08 MPa.

4. Procédé selon la revendication 1, dans lequel ledit catalyseur est préparé sous forme d'une matière particulaire.
